# EUROPEAN PATENT APPLICATION

(11) **EP 3 842 356 A1**
(43) Date of publication of application: **30.06.2021**
(21) Application number: 20856544.0
(22) Date of filing: 23.04.2020
(51) Int. Cl.: B65D 30/16, B65D 30/22, B65D 65/40, B65D 77/04

(54) **CONTAINER**

(30) Priority: 30.08.2019 WO PCT/JP2019/034166
(71) Applicant: Kao Corporation, Chuo-ku Tokyo 103-8210 (JP)
(72) Inventor: OTSUKA, Takahiro, Tokyo 131-8501 (JP)
(74) Representative: Vossius & Partner Patentanwälte Rechtsanwälte mbB
(86) International application number: PCT/JP2020/017497
(87) International publication number: WO 2021/038959

(57) **Abstract**

A container made of a sheet material including a plurality of layered film layers including a first film layer and a second film layer. The sheet material is formed into a bag by attaching at least a part of a periphery of the sheet material to form a containing region for accommodating a content inside the second film layer. The container includes, between the first film layer and the second film layer, a film attached portion where the first film layer and the second film layer are attached to each other, and a filler enclosed portion bulged out to a thickness direction of the sheet material than the film attached portion because the filler is present therein. A printed layer including an ink layer is formed on at least one surface selected from outside and inside surfaces of the first film layer, and outside and inside surfaces of the second film layer, and the printed layer is removable from the surface of the film layer by washing with an aqueous solvent.

## Description

### TECHNICAL FIELD

The present invention relates to a container and a container-packed product.

### BACKGROUND ART

As a sheet material container having a structure in which a plurality of films are layered and a filler, such as air, enclosed between layers of the films, for example, Patent Document 1 describes a sheet material container including an inner container that accommodates a content to be accommodated, and a cover made of a covering sheet material obtained by the layer stack of a plurality of film layers for covering the inner container. The covering sheet material includes a film region (attached region) where the plurality of film layers are attached to one another, and a filler enclosed portion bulged out to a thickness direction of the covering sheet material than the film region because a filler such as air is present between the plurality of film layers. The sheet material container further includes an outside air introducing portion for introducing the outside air between the inner container and the cover.

### CITATION LIST

Patent Document 1: Japanese Patent No. 6193535

### SUMMARY OF THE INVENTION

The present invention relates to a container made of a sheet material including a plurality of layered film layers including a first film layer and a second film layer, in which the sheet material is formed into a bag by attaching at least a part of a periphery of the sheet material to form a containing region for accommodating a content inside the second film layer. The container includes, between the first film layer and the second film layer, a film attached portion where the first film layer and the second film layer are attached to each other, and a filler enclosed portion bulged out to a thickness direction of the sheet material than the film attached portion because the filler is present therein. A printed layer including an ink layer is formed on at least one surface selected from outside and inside surfaces of the first film layer, and outside and inside surfaces of the second film layer, and the printed layer is removable from the surface of the film layer by washing with an aqueous solvent.

### Brief Description of Drawings

[Fig. 1] Fig. 1 is a perspective view of a container according to a first embodiment of the present invention.
[Fig. 2] Fig. 2 is a cross-sectional view of film layers taken along line II-II of Fig. 1.
[Fig. 3] Fig. 3 is a cross-sectional view of film layers of a container according to a modification of the first embodiment of the present invention.
[Fig. 4] Fig. 4 is a cross-sectional view illustrating a film attached state of the film layers of Fig. 3.
[Fig. 5] Fig. 5 is a cross-sectional view of film layers of a container according to another modification of the first embodiment of the present invention.
[Fig. 6] Fig. 6 is a cross-sectional view of film layers of a container according to a second embodiment of the present invention.
[Fig. 7] Fig. 7 is a cross-sectional view of film layers of a container according to a modification of the second embodiment of the present invention.

### DESCRIPTION OF EMBODIMENTS

A sheet material container described in Patent Document 1 keeps its structure because a filler is enclosed in a filler enclosed portion, and hence, a sheet material can be thinned. Besides, when its content has been used up, its rigidity can be lost by removing the filler from the filler enclosed portion such that the container can be squashed, and thus, waste can be reduced.

In order to further reduce environmental load, however, there are demands for further improvement of various sheet material containers in environmental characteristics and the like. According to examination made by the present inventor, although the sheet material container described in Patent Document 1 is excellent in that waste can be reduced, there is room for further improvement, particularly from the viewpoint of improving recyclability, in the quality and the like of a recyclable material recycled from the sheet material container.

According to the present invention, a container having high recyclability with rigidity as a container retained, and a container-packed product using the container can be provided.

Now, a preferred embodiment of the present invention will be described with reference to the accompanying drawings. It is noted that similar components are denoted by the same reference characters throughout the drawings, and overlapping descriptions will not be repeated.

### [Entire Configuration]

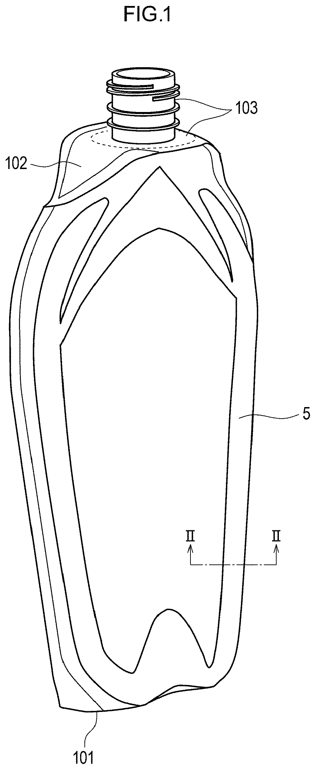

First, the entire configuration of a container according to the present embodiment will be described with reference to Figs. 1 to 7.

The container according to the present invention is a container made of a sheet material including a plurality of layered film layers, and includes the following embodiments.

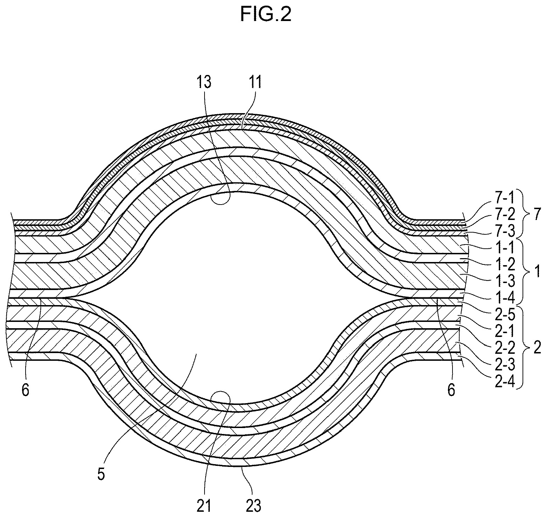

In a container according to a first embodiment of the present invention, as illustrated in, for examples, Figs. 2 to 5, at least a part of a periphery of a sheet material including a first film layer 1 and a second film layer 2 are attached to be formed into a bag for forming a containing region for accommodating a content inside the second film layer 2, and a printed layer 7 including an ink layer 7-2 is formed on at least one surface selected from an outside surface 11 and an inside surface 13 of the first film layer 1, and an outside surface 21 and an inside surface 23 of the second film layer 2.

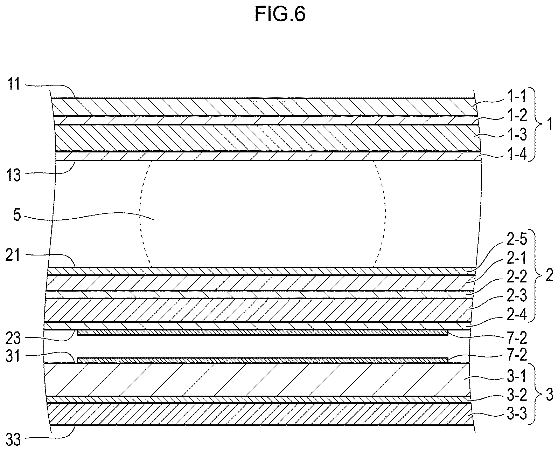

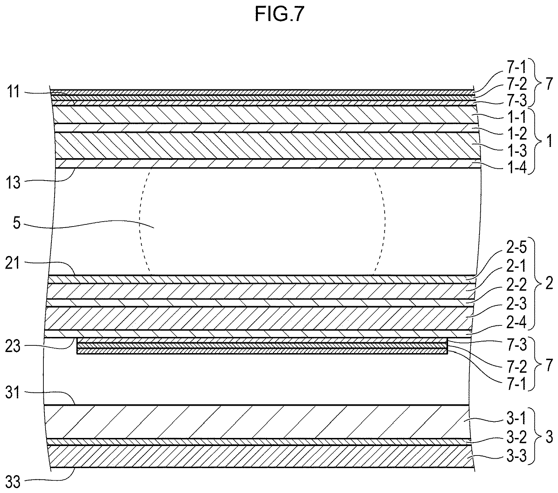

In a container according to a second embodiment of the present invention, as illustrated in, for example, Figs. 6 and 7, at least a part of a periphery of a sheet material including, in addition to a first film layer 1 and a second film layer 2, a third film layer 3 disposed inside the second film layer is attached to be formed into a bag for forming a containing region for accommodating a content inside the third film layer 3, and a printed layer 7 including an ink layer 7-2 is formed on at least one surface selected from an outside surface 11 and an inside surface 13 of the first film layer 1, and an outside surface 21 and an inside surface 23 of the second film layer 2 in the same manner as in the first embodiment. In the second embodiment, it is more preferable that the printed layer 7 is formed also on an outside surface 31 and/or an inside surface 33 of the third film layer 3.

The container of the present invention according to another embodiment may have a structure in which at least a part of a periphery of a sheet material including, in addition to a first film layer 1 and a second film layer 2, a third film layer 3 disposed inside the second film layer is attached to be formed into a bag for forming a containing region for accommodating a content inside the third film layer 3, and a printed layer 7 including an ink layer 7-2 is formed on at least one surface selected from outside and inside surfaces (11 and 13) of the first film layer 1, outside and inside surfaces (21 and 23) of the second film layer 2, and outside and inside surfaces (31 and 33) of the third film layer 3. Also in this embodiment, it is more preferable that the printed layer 7 is formed on the outside surface 31 and/or the inside surface 33 of the third film layer 3.

Here, in the present invention, in each film layer of the sheet material included in the container of the present invention, a surface corresponding to the outer side (outside) of the container in forming the container is referred to as the "outside surface", and a surface corresponding to the inner side (inside (side of the containing region)) of the container is referred to as the "inside surface".

The printed layer 7 is removable from the surface of the film layer by washing with an aqueous solvent (such as warm water, alkaline water, or acid water). Here, in the present invention, the term "removable by washing with an aqueous solvent" means a structure in which the printed layer 7 can be removed from the surface of the film layer through a contact with an aqueous solvent (water, or a hydrophilic solvent containing 50% by mass or more of water), and includes a structure in which the printed layer 7 is removable not only by immersing in or exposed to a flow of the aqueous solvent but also by a method of further applying physical force, such as stirring, electrolytic cleaning, spray cleaning, scrub cleaning, or ultrasonic cleaning. Furthermore, a structure in which the printed layer 7 is removable not only by immersing in the aqueous solvent or the like but also by a method using, for example, heated steam (water vapor) is also included.

Besides, in the present invention, the term "to remove the printed layer" from the surface of the film layer means that at least 90% or more of the ink layer 7-2 of the printed layer 7 formed on the surface of the film layer is removed, and the ratio is preferably 95% or more, and further preferably 98% or more. A structure in which 90% or more of the entire printed layer 7 is removed from the surface may be employed. It is noted that the ratio herein means a mass ratio.

Besides, both in the first embodiment and the second embodiment, the container includes, between the first film layer 1 and the second film layer 2, a film attached portion where the first film layer 1 and the second film layer 2 are attached to each other, and a filler enclosed portion 5 bulged out to a thickness direction of the sheet material than the film attached portion because the filler is present therein. The container may further include, between the first film layer 1 and the second film layer 2, a non-attached region in addition to the film attached portion and the filler enclosed portion 5.

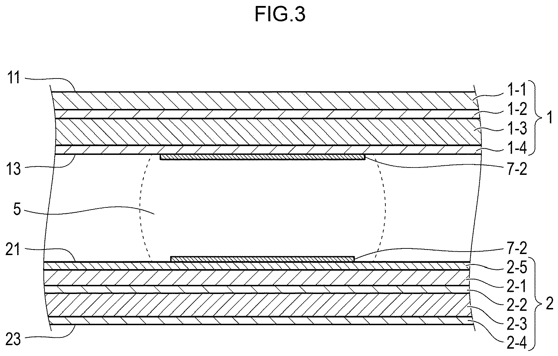

It is noted, in Fig. 3 and Figs. 5 to 7, that the first film layer 1, the second film layer 2 and the third film layer 3 are illustrated to be away from one another for convenience sake so that the film layer structure of the container of the present invention can be easily understood. When attached to one another in the form of a film, however, these film layers may be in contact with one another in a non-attached state in the filler enclosed portion 5 before enclosing the filler and in the non-attached region.

The filler enclosed portion 5 is formed, as illustrated in, for example, Fig. 1, to be continuously around the periphery of a container main body. Besides, before or after accommodating a content, the filler is introduced into the filler enclosed portion 5 of the container through a filler introducing portion or the like formed, for example, as a non-attached region that communicates with the filler enclosed portion 5, is provided integrally with the film layers, and reaches outer edges. Thus, the filler enclosed portion 5 bulges out to the thickness direction of the sheet material, so as to impart rigidity to the container main body. In other words, high self-standing property, compressive strength, and squeeze-back property are thus imparted to the container main body. The filler introducing portion is sealed by an appropriate method after introducing the filler, and is cut off if necessary.

Here, the filler enclosed portion 5 may be formed in the form of a plurality of independent portions instead of a continuous portion, and may be formed in another region except for the periphery of the container main body, and its number and formation region are not especially limited. When the content accommodated in the container has been used up, the container main body loses the rigidity by removing the filler from the filler enclosed portion 5, and hence, the container main body can be easily squashed. As a result, the reduction of waste and the reduction of the environmental load can be expected.

The filler enclosed in the filler enclosed portion 5 can be a fluid (a gas or a liquid), a solid (such as a particulate or a resin pellet), or a semisolid (such as a foam), and is preferably a gas. Examples of the gas to be used as the filler include, air, nitrogen, oxygen, and an inert gas (such as argon or helium), and from the viewpoint of cost and the like, the gas is more preferably air. An internal pressure of the filler enclosed portion 5 is not limited, and from the viewpoint of imparting sufficient rigidity in forming a flexible container, the pressure is, in terms of, for example, a gauge pressure, preferably 10 kPa or more, and more preferably 20 kPa or more. In addition, the pressure is preferably 500 kPa or less, and more preferably 100 kPa or less.

In this manner, it is possible to form a flexible container of the present invention in a shape as illustrated in, for example, Fig. 1, in which the second film layer 2 is disposed inside (on the inner side of the container) of the first film layer 1, the containing region for accommodating a content inside the second film layer 2 directly, namely, for accommodating the content to be in direct contact with the second film layer 2, or indirectly, namely, for accommodating the content to be in direct contact with an inside of another film layer disposed inside the second film layer 2, is included, and the filler is enclosed in the filler enclosed portion 5. The container of the present invention may be provided with, as illustrated in, for example, Fig. 1, a bottom gusset portion 101 corresponding to a bottom of the container for obtaining a self-standing form, and may be further provided with a top gusset portion 102 corresponding to a top surface of the container at an opposite end to the bottom gusset portion 101. Alternatively, the container of the present invention may be in a form supposed not to self-stand but to be set down.

Besides, the container of the present invention is provided with an opening through which the content is put or discharged, and the opening may be further provided with a spout 103, as illustrated in, for example, Fig. 1, sealed by a cap with a pump or the like. The spout 103 is preferred to be made of the same material as any of the film layers, or is preferred to be easily separated, from the film layers from the viewpoint of improving the recyclability. The spout 103 may be provided with a screw thread to be used for sealing the opening. Alternatively, the container of the present invention may have the following structure: the opening is a non-attached portion of the film layers in the containing region, the content is put through the non-attached portion, and the non-attached portion is sealed by ultrasonic sealing, attaching agent sealing, heat sealing or the like. The structure of the container can be appropriately selected in accordance with the shape of the container main body and the structure of the film layers.

The container of the present invention can be used for obtaining a container-packed product in which a content is accommodated in the containing region. When the content accommodated in the container-packed product is to be used, the content is discharged for use through the opening by squeezing, pumping or the like. The type of the content accommodated in the container of the present invention is not especially limited, but examples include a shampoo, a rinse, a body wash, a facial wash, a detergent, a bleach, a softener, a drink, food, an engine oil, and the like. When the container is to be recycled (for material recycling), a small amount of the content remaining in the containing region of the container can be almost removed by washing, and from the viewpoint that such a residue of the content can be washed away and removed simultaneously with removal of the printed layer 7, the content is suitably one washable with an aqueous solvent.

Besides, the content may be a liquid (including a paste), or may be a solid (such as a particulate (including granular) substance, or a powdered substance).

When the content is a liquid, its viscosity is, for example, at 30°C, preferably 1 mPa·s or more and 120000 mPa·s or less, and more preferably 60000 mPa·s or less (all measured with a B-type viscometer (such as Viscometer TV-10 or Viscometer TVB-10, manufactured by Toki Sangyo Co., Ltd.)).

### [First Embodiment]

Next, referring to Figs. 2 to 5, the first embodiment of the container of the present invention will be described in detail.

The container according to the first embodiment of the present invention is made of a sheet material including a plurality of layered film layers including a first film layer 1 as the outermost film layer (film layer that is disposed on the outermost side when formed into the container, and covers the entire container), and a second film layer 2 disposed inside the first film layer 1. In other words, the second film layer 2 is disposed inside the first film layer 1 corresponding to the outermost film layer, and the containing region to accommodating the content formed into a bag by attaching at least a part of the periphery of the sheet material is present inside the second film layer 2.

Between the first film layer 1 and the second film layer 2, the filler enclosed portion 5 bulged out to the thickness direction of the sheet material than the film attached portion because the filler is present therein, and the film attached portion, formed to surround the filler enclosed portion 5, where the first film layer 1 and the second film layer 2 are attached to each other are provided. Since the container of the first embodiment of the present invention includes the filler enclosed portion 5 enclosing the filler, the amount of a resin to be used can be reduced with the rigidity of the container retained. This also applies to the container of the second embodiment of the present invention described later.

When the first film layer 1 and the second film layer 2 are made of materials having heat sealability, the film attached portion is preferably attached by heat sealing from the viewpoint of easiness in forming the filler enclosed portion 5 and the like. Conditions for the heat sealing employed here may be appropriately set in accordance with the characteristics of the materials, and the heat sealing is performed, for example, at a sealing temperature of 110°C or more and 230°C or less, a sealing pressure of 0.1 MPa or more and 1.0 MPa or less, and a sealing time of 0.1 seconds or more and 10 seconds or less.

Here, the first film layer 1 and the second film layer 2 of the container of the first embodiment of the present invention are layers working as a substrate of the sheet material, and are preferably made of, but are not limited to, a resin material. Thus, the container can be recycled into a recyclable material (recycled resin) made of the resin material. Suitable examples of the resin material include nylon (Ny), polyethylene terephthalate (PET), polytrimethylene terephthalate (PTT), polybutylene terephthalate (PBT), polyethylene naphthalate (PEN), polybutylene naphthalate (PBN), polylactic acid (PLA), polyhydroxyalkanoate (PHA), polyethylene (PE), an ethylene-vinyl alcohol copolymer (EVOH), polypropylene (PP), an acrylonitrile-butadienestyrene copolymer (ABS), polyvinyl chloride (PVC), polycarbonate (PC), and polystyrene (PS).

Besides, each of the first film layer 1 and the second film layer 2 may be made of a single substrate layer (layer working as the substrate of the film), or may have a structure including a plurality of substrate layers laminated, or a plurality of substrate layers and other layers laminated. The laminating may be in either of a structure in which layers are laminated by heat seal bonding (not including a lamination bonded layer), or a structure including a lamination bonded layer laminated by bonding by dry lamination, extrusion lamination, coextrusion molding or the like.

Besides, as another layer (added layer) different from the substrate layer of the film layer, a layer working as an underlayer for the printed layer 7 and having a function to make an ink well taken may be provided on a surface of the film layer where the printed layer 7 is formed.

For example, the container of the first embodiment of the present invention has the following layer structure.

First, the first film layer 1 has a four-layer structure formed by laminating, from the outer side of the container, a substrate layer 1-1, a substrate layer 1-2, a substrate layer 1-3, and a substrate layer 1-4 in the stated order as illustrated in Figs. 2 to 5.

The substrate layer 1-1 is made of, for example, polyethylene terephthalate (PET) or oriented nylon (ONy). As the principal functions, the substrate layer 1-1 provides glossiness and printability to the outside of the container as well as ensures the rigidity of the container.

The substrate layer 1-2 is, for example, a layer, formed on a surface of the substrate layer 1-2 on the side of the substrate layer 1-1, of deposited transparent PET containing polyethylene terephthalate on which silica and/or alumina are vapor deposited. As the principal function, the substrate layer 1-2 provides a gas barrier property to the container.

The substrate layer 1-3 is made of, for example, oriented nylon. As the principal function, the substrate layer 1-3 ensures pinhole resistance of the container.

The substrate layer 1-4 is made of, for example, linear low density polyethylene (LLDPE). As the principal function, the substrate layer 1-4 ensures heat sealability to the second film layer 2 and heat sealability between the first film layer 1.

Next, an example of the layer structure of the second film layer 2 includes, also as illustrated in Figs. 2 to 5, a layer structure including, in addition to a layer structure similar to the substrate layers 1-1 to 1-4 of the first film layer 1 (substrate layers 2-1 to 2-4), a substrate layer 2-5 made of, for example, linear low density polyethylene (LLDPE). The substrate layer 2-5 is a layer adjacent to the substrate layer 2-1, and forms a surface of the second film layer 2 opposite to the substrate layer 2-4. As the principal function, the substrate layer 2-5 ensures heat sealability to the first film layer 1.

The layer structures of the first film layer 1 and the second film layer 2 are, however, not limited to the examples described above, and the materials of each layer included in the first film layer 1 and the second film layer 2 are also not limited to those described in the examples.

The first embodiment of the container of the present invention preferably contains, from the viewpoint of further improving the recyclability, in all the plurality of film layers (particularly the substrate layers) included in the sheet material, materials made of the same type of resins (resins the same in molecular skeletons of main chains and side chains as chemical structures of molecules). The materials are more preferably any one of polyethylene-based materials such as high density polyethylene (HDPE), middle density polyethylene (MDPE), low density polyethylene (LDPE), linear low density polyethylene (LLDPE), ultra low density polyethylene (ULDPE), and an ethylene-vinyl alcohol copolymer (EVOH), polypropylene-based materials such as oriented polypropylene (OPP), cast polypropylene (CPP), isotactic PP, syndiotactic PP, atactic PP, random PP, and block PP, polyester-based materials such as polyethylene terephthalate (PET), amorphous polyethylene terephthalate (amorphous PET), polybutylene terephthalate (PBT), polyethylene naphthalate (PEN), and polybutylene naphthalate (PBN), and polyamide-based materials such as oriented nylon (ONy), cast nylon (CNy), nylon 6, nylon 66, nylon 11, nylon 12, and MXD6, and are particularly preferably any one of the polyethylene-based materials.

In another modification, when the plurality of film layers included in the sheet material include another film layer in addition to the first film layer 1 and the second film layer 2, at least the first film layer 1 and the second film layer 2 out of these plurality of film layers may contain the materials made of the same type of resins, and the materials may be the polyethylene-based materials or the like.

When this structure is employed, it is preferable that the first film layer 1 and the second film layer 2 should be separated from the container and collected in recycling the container, so as to use the first film layer 1 and the second film layer 2 as recyclable raw materials. Thus, washing of a content can be omitted in a recycling step.

In the first embodiment of the container of the present invention, the printed layer 7 including the ink layer 7-2 is formed on at least one surface selected from the outside surface 11 and the inside surface 13 of the first film layer 1, and the outside surface 21 and the inside surface 23 of the second film layer 2. The printed layer 7 is removable from the surface of the film layer on which it is formed by washing with an aqueous solvent (such as warm water, alkaline water, or acid water).

Here, the printed layer 7 of the first embodiment of the container of the present invention is a layer at least including the ink layer 7-2 made of a printing ink (a pigment, a binder resin and the like), and may include, in addition to the ink layer 7-2, a coating layer 7-1 and the like having a function to protect the surface of the ink layer. The ink layer 7-2 can be formed by, for example, offset printing, screen printing, gravure printing, flexographic printing, or the like. The coating layer 7-1 may be a medium printed layer, that is, a colorless printed layer. The printed layer 7 may further include an underlayer 7-3 soluble in an aqueous solvent in order that the printed layer 7 can be removed by washing with the aqueous solvent. The underlayer 7-3 can be formed by, for example, offset printing, screen printing, gravure printing, flexographic printing or the like, and can be formed by a method different from printing.

The printed layer 7 may have any structure removable, as the printed layer 7, by washing with an aqueous solvent. A specific example includes a structure in which the printed layer 7 includes an underlayer 7-3 formed on the surface of the film layer and soluble in an aqueous solvent, the ink layer 7-2 formed on the surface of the underlayer 7-3, and the coating layer 7-1 formed on the surface of the ink layer 7-2. In this structure, even if the ink layer 7-2 is not soluble in an aqueous solvent, the underlayer 7-3 is soluble in the aqueous solvent, and hence the printed layer 7 including the ink layer 7-2 can be removed from the surface of the film layer by washing. On the other hand, when the printed layer 7 does not include the underlayer 7-3 soluble in an aqueous solvent, the ink layer 7-2 preferably contains a material soluble in an aqueous solvent. An example of a material soluble in an aqueous solvent to be used in the ink layer 7-2 includes an ink containing, as a principal component (in an amount of, for example, 80% by mass or more, and further 90% by mass or more) of a vehicle, (for example, one or more selected from the group consisting of) polyester, polyurethane, and acrylic resins, and the principal component may be a copolymer or the like. In particular, a preferable example of an ink soluble in water includes an ink containing a resin having a large amount (for example, 1% by mole or more) of a hydrophilic group such as a carboxy group, a hydroxy group, an ester group, an ether group, an amide group, or a urethane group. A preferable example of an ink soluble in alkaline water includes an ink containing a resin having a carboxy group in an amount of 10% by mass or more in resins forming a vehicle. A preferable example of an ink soluble in acid water includes an ink containing a resin having an amino group in an amount of 10% by mass or more in resins forming a vehicle. Alternatively, when a toner is used in the ink layer 7-2, examples of the toner include one made of a material in which a binder resin of the ink layer 7-2 (binder resin contained in an amount of preferably 30% by mass or more, and more preferably 50% by mass or more of the ink layer 7-2) is soluble in an aqueous solvent, and one in which a binder resin soluble in an aqueous solvent is contained in a part (preferably 5% by mass or more, and more preferably 10% by mass or more) of the binder resin.

Thus, when the container of the present invention in which the content has been used up is shredded, and washed with an aqueous solvent by alkaline washing, acid washing, warm water washing, or the like, the printed layer 7 can be easily removed from the shreds. As a result, when a recycled resin material such as a resin pellet is produced from the washed shreds, coloring of the recycled resin material is difficult to occur.

In particular, it is suitable to employ a structure in which the printed layer 7 is removable from the surface of the film layer by washing with warm water of 30°C or more, preferably 40°C or more, more preferably 50°C or more, and further preferably 60°C or more, in other words, it is suitable to employ a structure in which the printed layer 7 contains a material soluble in warm water of 30°C or more, preferably 40°C or more, more preferably 50°C or more, and further preferably 60°C or more. In other words, it is preferable that the printed layer 7 should not be removed from the surface of the film layer by washing with water cooler than 30°C, namely, the printed layer 7 contains a material insoluble in water cooler than 30°C. Specifically, the printed layer 7 preferably has temperature responsiveness that it is not removed from the surface of the film layer by washing with water cooler than 30°C but is removable from the surface of the film layer by washing with warm water not less than a specific temperature of 30°C or more (for example, 40°C, or 50°C, or 60°C). Here, the term "insoluble in water cooler than 30°C (not to be removed from the surface of the film layer by washing with water cooler than 30°C)" means that when a sample is immersed in a beaker containing water cooler than 30°C, a pigment component of the ink layer 7-2 is neither dissolved nor dispersed in the water (the ink layer 7-2 is removed from the surface of the film layer in an amount less than 1% by mass) even after 24 hours. When such a material is used, the printed layer 7 can be very easily removed by warm water washing, and in addition, there is no need to use, for the washing, an organic solvent as well as an alkali or acid, and thus, the environmental load is preferably very small.

An example of such a material includes a temperature-responsive water-soluble resin that contains a monomer unit A having a hydrophilic group different from a hydrophilic group constituting polymerization related to formation of the resin, and a monomer unit B not having a hydrophilic group different from the hydrophilic group constituting the polymerization related to the formation of the resin, a ratio of the amount of the monomer unit A to the total amount of all monomer units being 5% by mole or more and 35% by mole or less. Alternatively, the material may be a mixture of the water-soluble resin obtained by mixing, with respect to 100 parts by mass of the water-soluble resin, 1 part by mass or more and 10 parts by mass or less of a salt different from the water-soluble resin. Such a temperature-responsive water-soluble resin has excellent moisture resistance as well as an extremely high dissolution rate in warm water of 30°C or more. Even when this temperature-responsive water-soluble resin is used as the underlayer 7-3, adhesiveness to the ink layer 7-2 or the like is very good.

Now, the temperature-responsive water-soluble resin will be described in detail.

### [Monomer Unit A]

The monomer unit A has a hydrophilic group different from a hydrophilic group constituting the polymerization related to the formation of the resin. The monomer unit A is not especially limited as long as it is a monomer unit having the hydrophilic group. Besides, a monomer used for inducing the monomer unit A is called also as a monomer A.

From the viewpoint of improving solubility in neutral water of the water-soluble resin, and from the viewpoint of easing a polymerization reaction performed in producing a water-soluble polyester resin, examples of the hydrophilic group include one or more selected from the group consisting of a primary amino group, a secondary amino group, a tertiary amino group, a quaternary ammonium base, an oxyalkylene group, a hydroxy group, a carboxy group, a carboxy base, a phosphoric acid group, a phosphoric acid base, a sulfonic acid group, and a sulfonic acid base. Among these, from the viewpoint of improving heat resistance of the water-soluble resin, one or more selected from the group consisting of a quaternary ammonium base, an oxyalkylene group, a carboxy base, a phosphoric acid base, and a sulfonic acid base are preferred, and one or more selected from the group consisting of a quaternary ammonium base, an oxyalkylene group, and a sulfonic acid base are more preferred, and a sulfonic acid base is still more preferred.

From the viewpoint of improving the solubility in neutral water of the water-soluble resin, and from the viewpoint of easing the polymerization reaction performed in producing the water-soluble polyester resin, the sulfonic acid base is preferably a sulfonic acid base represented by -SO₃M³ (wherein M³ represents a counter ion of a sulfonic acid group constituting the sulfonic acid base, and from the viewpoint of improving the solubility in neutral water of the water-soluble resin, is preferably one or more selected from the group consisting of metal ions and ammonium ions, is more preferably one or more selected from the group consisting of metal ions, is further preferably one or more selected from the group consisting of alkali metal ions and alkali earth metal ions, is further preferably one or more selected from the group consisting of alkali metal ions, is further preferably one or more selected from the group consisting of sodium ions and potassium ions, and is still further preferably a sodium ion).

The ratio of the amount of the monomer unit A to the total amount of all the monomer units of the water-soluble resin is, from the viewpoint of improving the solubility in neutral water of the water-soluble resin, 5% by mole or more, preferably 7% by mole or more, more preferably 10% by mole or more, and further preferably 12% by mole or more, and from the viewpoint of improving the moisture resistance, 35% by mole or less, preferably 30% by mole or less, more preferably 20% by mole or less, further preferably 15% by mole or less, and still further preferably 13% by mole or less. Besides, the ratio of the amount of the monomer unit A to the total amount of all the monomer units of the water-soluble resin is, from the viewpoint of improving the solubility in neutral water and the moisture resistance of the water-soluble resin, 5 to 35% by mole, preferably 7 to 30% by mole, more preferably 10 to 20% by mole, and further preferably 12 to 15% by mole.

### [Monomer Unit B]

The monomer unit B does not have the hydrophilic group. A monomer used for inducing the monomer unit B is called also as a monomer B.

A ratio of the amount of substance of the monomer unit B in the water-soluble resin to the total amount of substance of all the monomer units of the water-soluble resin is, from the viewpoint of improving the moisture resistance of the water-soluble resin, preferably 15% by mole or more, more preferably 25% by mole or more, and further preferably 30% by mole or more, and from the viewpoint of improving the solubility in neutral water of the water-soluble resin, preferably 45% by mole or less, more preferably 42% by mole or less, and further preferably 40% by mole or less. The ratio of the amount of substance of the monomer unit B in the water-soluble resin to the total amount of substance of all the monomer units in the water-soluble resin is, from the viewpoint of improving the solubility in neutral water and the moisture resistance of the water-soluble resin, preferably 15 to 45% by mole, more preferably 25 to 42% by mole, and further preferably 30 to 40% by mole.

A weight average molecular weight of the water-soluble resin is, from the viewpoint of layer strength of the printed layer 7 and the like, preferably 1000 or more, more preferably 5000 or more, further preferably 10000 or more, and still further preferably 15000 or more, and from the viewpoint of improving the solubility in neutral water of the water-soluble resin, preferably 80000 or less, more preferably 50000 or less, further preferably 30000 or less, and still further preferably 20000 or less. It is noted that the weight average molecular weight is measured, in terms of standard polystyrene, by gel permeation chromatography (GPC) using tetrahydrofuran as a solvent.

Examples of the water-soluble resin include a water-soluble polyester resin, a water-soluble polyamide resin, a water-soluble polyimide resin, a water-soluble acrylic resin, a water-soluble polyurethane resin, a water-soluble polyallylamine resin, a water-soluble phenol resin, a water-soluble epoxy resin, a water-soluble phenoxy resin, a water-soluble urea resin, a water-soluble melamine resin, a polyvinyl alcohol resin, and modified products of these resins. One of these, or a combination of two or more of these can be used. Among these, one or more selected from the group consisting of a water-soluble polyester resin and a water-soluble polyamide resin are preferred, and a water-soluble polyester resin is more preferred.

### [Water-soluble Polyester Resin]

An example of the water-soluble polyester resin includes a water-soluble polyester resin containing a hydrophilic monomer unit having the hydrophilic group (monomer unit A), a dicarboxylic acid monomer unit not having the hydrophilic group (monomer unit B), and a diol monomer unit.

### (Hydrophilic Monomer Unit)

The water-soluble polyester resin contains the hydrophilic monomer unit having the hydrophilic group. The hydrophilic monomer unit is not especially limited as long as it is a monomer unit having the hydrophilic group, and from the viewpoint of improving the solubility in neutral water and the moisture resistance of the water-soluble resin, is preferably an aromatic dicarboxylic acid monomer unit having the hydrophilic group.

The monomer A is, from the viewpoint of improving the solubility in neutral water and the moisture resistance of the water-soluble resin, and from the viewpoint of easing the polymerization reaction performed in producing the water-soluble polyester resin, preferably one or more selected from the group consisting of carboxylic acids, amines and amino acids, and more preferably a carboxylic acid. Among carboxylic acids, from the same viewpoints, an aromatic carboxylic acid is preferred, and one or more selected from the group consisting of a hydroxy group-containing aromatic dicarboxylic acid, a primary amino group-containing aromatic dicarboxylic acid, a sulfonic acid group-containing aromatic dicarboxylic acid, and a sulfonic acid base-containing aromatic dicarboxylic acid are more preferred. Among these, from the same viewpoints, one or more selected from the group consisting of hydroxy phthalic acids, amino phthalic acids, sulfo-phthalic acids, and sulfo-naphthalene dicarboxylic acids are preferred, one or more selected from the group consisting of sulfo-phthalic acids are more preferred, one or more selected from the group consisting of sulfo-isophthalic acids and sulfo-terephthalic acids are further preferred, and 5-sulfo-isophthalic acid is still further preferred.

The content of the hydrophilic group in the water-soluble polyester resin is, from the viewpoint of improving the solubility in neutral water of the water-soluble resin, preferably 0.5 mmol/g or more, more preferably 0.6 mmol/g or more, and further preferably 0.7 mmol/g or more, and from the viewpoint of improving the moisture resistance, preferably 3.0 mmol/g or less, more preferably 2.0 mmol/g or less, and further preferably 1.5 mmol/g or less. The content of the hydrophilic group in the water-soluble polyester resin is, from the viewpoint of improving the solubility in neutral water and the moisture resistance of the water-soluble resin, preferably 0.5 to 3.0 mmol/g, more preferably 0.6 to 2.0 mmol/g, and further preferably 0.7 to 1.5 mmol/g.

The ratio of the amount of the hydrophilic monomer unit to the total amount of all the monomer units in the water-soluble polyester resin is, from the viewpoint of improving the solubility in neutral water of the water-soluble resin, 5% by mole or more, preferably 7% by mole or more, more preferably 10% by mole or more, and further preferably 12% by mole or more, and from the viewpoint of improving the moisture resistance, 35% by mole or less, preferably 30% by mole or less, more preferably 20% by mole or less, further preferably 15% by mole or less, and still further preferably 13% by mole or less. The ratio of the amount of the hydrophilic monomer unit to the total amount of all the monomer units in the water-soluble polyester resin is, from the viewpoint of improving the solubility in neutral water and the moisture resistance of the water-soluble resin, 5 to 35% by mole, preferably 7 to 30% by mole, more preferably 10 to 20% by mole, and further preferably 12 to 15% by mole.

### (Dicarboxylic Acid Monomer Unit not having Hydrophilic Group)

The water-soluble polyester resin contains the dicarboxylic acid monomer unit not having the hydrophilic group (hereinafter also referred to as the hydrophobic dicarboxylic acid monomer unit). In the present invention, a dicarboxylic acid used for inducing the hydrophobic dicarboxylic acid monomer unit is called also as the dicarboxylic acid.

The dicarboxylic acid is, from the viewpoint of improving the solubility in neutral water and the moisture resistance of the water-soluble resin, and from the viewpoint of easing the polymerization reaction performed in producing the water-soluble polyester resin, preferably one or more selected from the group consisting of aromatic dicarboxylic acids, aliphatic dicarboxylic acids, and alicyclic dicarboxylic acids. Among these, from the same viewpoints, one or more selected from the group consisting of terephthalic acid, isophthalic acid, 2,5-furandicarboxylic acid, 2,6-naphthalenedicarboxylic acid, 1,4-cyclohexanedicarboxylic acid, and 1,3-adamantanedicarboxylic acid are more preferred, one or more selected from the group consisting of terephthalic acid, 2,5-furandicarboxylic acid, and 2,6-naphthalenedicarboxylic acid are further preferred, and 2,6-naphthalenedicarboxylic acid is still further preferred.

A ratio of the amount of substance of the hydrophobic dicarboxylic acid monomer unit in the water-soluble polyester resin to the total amount of substance of all the monomer units in the water-soluble polyester resin is, from the viewpoint of improving the moisture resistance of the water-soluble resin, preferably 15% by mole or more, more preferably 25% by mole or more, and further preferably 30% by mole or more, and from the viewpoint of improving the solubility in neutral water of the water-soluble resin, preferably 45% by mole or less, more preferably 42% by mole or less, and further preferably 40% by mole or less. The ratio of the amount of substance of the hydrophobic dicarboxylic acid monomer unit in the water-soluble polyester resin to the total amount of substance of all the monomer units in the water-soluble polyester resin is, from the viewpoint of improving the solubility in neutral water and the moisture resistance of the water-soluble resin, preferably 15 to 45% by mole, more preferably 25 to 42% by mole, and further preferably 30 to 40% by mole.

A molar ratio between the hydrophilic monomer unit and the hydrophobic dicarboxylic acid monomer unit in the water-soluble polyester resin (the hydrophilic monomer unit/the hydrophobic dicarboxylic acid monomer unit) is, from the viewpoint of improving the solubility in neutral water and the moisture resistance of the water-soluble resin, preferably 10/90 or more, more preferably 15/85 or more, further preferably 18/82 or more, and still further preferably 20/80 or more, and from the same viewpoint, preferably 70/30 or less, more preferably 65/35 or less, further preferably 60/40 or less, still further preferably 40/60 or less, and still further preferably 30/70 or less.

### (Diol Monomer Unit)

The water-soluble polyester resin has the diol monomer unit. A diol used for inducing the diol monomer unit is called also as the diol C.

As the diol C, any of aliphatic diols, aromatic diols, and the like can be used. From the viewpoint of production cost of the water-soluble polyester resin, an aliphatic diol is preferred.

The number of carbon atoms of the diol C is, from the viewpoint of improving the solubility in neutral water and the moisture resistance of the water-soluble resin, preferably 2 or more, and from the same viewpoint, preferably 31 or less, more preferably 25 or less, further preferably 20 or less, and still further preferably 15 or less.

Examples of the aliphatic diols include one or more selected from the group consisting of chain diols and cyclic diols. From the viewpoint of improving the solubility in neutral water and the moisture resistance of the water-soluble resin, a chain diol is preferred.

The number of carbon atoms of the chain diol is, from the viewpoint of improving the solubility in neutral water and the moisture resistance of the water-soluble resin, preferably 2 or more, and from the same viewpoint, preferably 6 or less, more preferably 4 or less, further preferably 3 or less, and still further preferably 2.

The diol C may have an ether oxygen atom, and when the diol C is a chain aliphatic diol, the number of ether oxygen atoms is preferably 1 or less from the viewpoint of improving the solubility in neutral water and the moisture resistance of the water-soluble resin, and when the diol C is a cyclic aliphatic diol, the number of ether oxygen atoms is preferably 2 or less from the same viewpoint.

From the viewpoint of improving the solubility in neutral water and the moisture resistance of the water-soluble resin, the chain diol is preferably one or more selected from the group consisting of ethylene glycol, 1,2-propandiol, 1,3-propanediol, diethylene glycol, and dipropylene glycol, and more preferably one or more selected from the group consisting of ethylene glycol, 1,2-propanediol, and 1,3-propanediol, and is further preferably ethylene glycol.

When the diol C contains one or more selected from the group consisting of ethylene glycol, 1,2-propanediol, 1,3-propanediol, diethylene glycol, and dipropylene glycol, a ratio of a total amount of ethylene glycol, 1,2-propanediol, 1,3-propanediol, diethylene glycol, and dipropylene glycol to a total amount of all diol monomer units in the water-soluble polyester resin is, from the viewpoint of improving the solubility in neutral water and the moisture resistance of the water-soluble resin, preferably 80% by mole or more, more preferably 90% by mole or more, further preferably 95% by mole or more, still further preferably 98% by mole or more, still further preferably substantially 100% by mole, and still further preferably 100% by mole. The term "substantially 100% by mole" means that a case where a substance except for ethylene glycol, 1,2-propanediol, 1,3-propanediol, diethylene glycol, and dipropylene glycol is inevitably contained is included.

In the water-soluble polyester resin, ratios of the amounts of the hydrophilic monomer unit and the dicarboxylic acid monomer unit to a total amount of all dicarboxylic acid monomer units including the hydrophilic monomer unit are, from the viewpoint of improving the solubility in neutral water and the moisture resistance of the water-soluble resin, respectively 10 to 70% by mole and 30 to 90% by mole, and in the water-soluble polyester resin, the dicarboxylic acid used for obtaining the dicarboxylic acid monomer unit is preferably 2,6-naphthalenedicarboxylic acid.

An example of the water-soluble polyester resin includes one represented by the following general formula (1) :

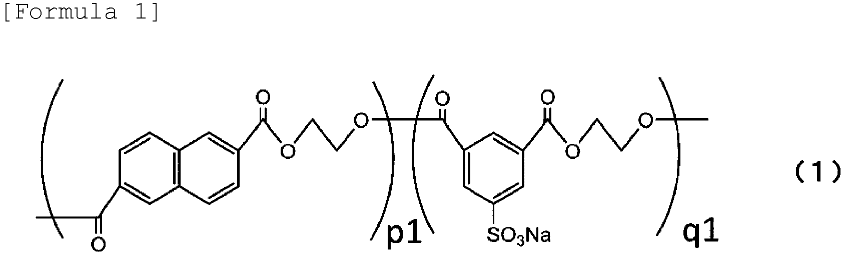

In the general formula (1), p1 represents a degree of polymerization of ethylene 2,6-napthalene carboxylate, and q1 represents a degree of polymerization of ethylene 5-sulfoisophthalate. The ethylene 2,6-naphthalene carboxylate and the ethylene 5-sulfoisophthalate are block-bonded or randomly bonded, and are more preferably randomly bonded from the viewpoint of improving the solubility in neutral water of the water-soluble resin.

The water-soluble polyester resin may have another monomer unit in addition to the hydrophilic monomer unit, the hydrophobic dicarboxylic acid monomer unit, and the diol monomer unit as long as the effects are not impaired.

A method for producing the water-soluble polyester resin is not especially limited, and any of known production methods for a polyester resin can be applied.

### (Salt (Component β) different from Water-soluble Resin)

A water-soluble resin composition containing the water-soluble resin may contain a salt (component β) different from the water-soluble resin.

The component β is, from the viewpoint of improving the solubility in neutral water and the heat resistance of the water-soluble resin composition, preferably an organic salt compound represented by the following general formula (2):

(R¹ - SO₃-) ₙXⁿ⁺ (2)

In the general formula (2), R¹ represents a hydrocarbon group having 1 to 30 carbon atoms that may have a substituent, n represents a number of 1 or 2, when n is 1, Xⁿ⁺ represents a sodium ion, a potassium ion, a lithium ion, an ammonium ion, or a phosphonium ion, and when n is 2, Xⁿ⁺ represents a magnesium ion, a calcium ion, a barium ion, or a zinc ion.

In the general formula (2), from the viewpoint of improving the solubility in neutral water and the heat resistance of the water-soluble resin composition, R¹ represents a hydrocarbon group that may have a substituent, and has 1 to 30 carbon atoms including the substituent. The hydrocarbon group may be any one of an aliphatic hydrocarbon group, an alicyclic hydrocarbon group, and an aromatic hydrocarbon group. When the hydrocarbon group is an aliphatic hydrocarbon group, the number of carbon atoms of the hydrocarbon group is, from the viewpoint of improving the solubility in neutral water and the heat resistance of the water-soluble resin composition, preferably 1 or more, more preferably 4 or more, and further preferably 8 or more, and preferably 30 or less, more preferably 25 or less, and further preferably 20 or less. When the hydrocarbon group is an alicyclic hydrocarbon group, the number of carbon atoms of the hydrocarbon group is, from the viewpoint of improving the solubility in neutral water and the heat resistance of the water-soluble resin composition, preferably 3 or more, more preferably 5 or more, further preferably 6 or more, and still further preferably 10 or more, and preferably 30 or less, more preferably 25 or less, and further preferably 20 or less. When the hydrocarbon group is an aromatic hydrocarbon group, the number of carbon atoms of the hydrocarbon group is, from the viewpoint of improving the solubility in neutral water and the heat resistance of the water-soluble resin composition, preferably 6 or more, more preferably 8 or more, and further preferably 10 or more, and preferably 30 or less, and more preferably 25 or less.

Besides, the substituent preferably contains, from the viewpoint of improving the solubility in neutral water and the heat resistance of the water-soluble resin composition, one or more selected from the group consisting of a carbon atom, an oxygen atom, a nitrogen atom, a sulfur atom, a phosphorus atom, a silicon atom, and a halogen atom, and in particular, is preferably a hydrocarbon group having 1 to 22 carbon atoms, or a halogenated alkyl group having 1 to 22 carbon atoms, more preferably a hydrocarbon group having 1 to 16 carbon atoms, or a halogenated alkyl group having 1 to 22 carbon atoms, further preferably a hydrocarbon group or a halogenated alkyl group having 1 to 12 carbon atoms, and still further preferably a hydrocarbon group having 1 to 12 carbon atoms.

In the general formula (2), from the viewpoint of improving the solubility in neutral water and the heat resistance of the water-soluble resin composition, Xⁿ⁺ represents a sodium ion, a potassium ion, a lithium ion, an ammonium ion, a phosphonium ion, a magnesium ion, a calcium ion, a barium ion, or a zinc ion, is preferably a sodium ion, a potassium ion, a lithium ion, a magnesium ion, an ammonium ion, or a phosphonium ion, more preferably a sodium ion, a lithium ion, an ammonium ion, or a phosphonium ion, further preferably a lithium ion, or a phosphonium ion, and still further preferably a phosphonium ion. Among phosphonium ions, from the viewpoint of improving the solubility in neutral water and the heat resistance of the water-soluble resin composition, a tetraalkylphosphonium ion is preferred, and a tetrabutylphosphonium ion is further preferred.

In the general formula (2), n is preferably 1 from the viewpoint of improving the solubility in neutral water and the heat resistance of the water-soluble resin composition.

As for the content of the organic salt compound in the water-soluble resin composition, from the viewpoint of improving the solubility in neutral water of the water-soluble resin composition, a ratio of an amount of substance (mol) of an alkyl sulfonic acid ion (R¹-SO₃⁻) of the organic salt compound to a sum of an amount of substance (mol) of a hydroxyl group of the water-soluble resin and an amount of substance (mol) of a sulfonic acid base of the water-soluble resin (amount of substance of alkyl sulfonic acid ion of organic salt compound/sum of amount of substance of hydroxyl group and amount of substance of sulfonic acid base of water-soluble resin) is preferably 0.005 or more, more preferably 0.01 or more, further preferably 0.02 or more, and still further preferably 0.03 or more, and from the viewpoint of improving the heat resistance of the water-soluble resin composition, is preferably 0.35 or less, more preferably 0.25 or less, and further preferably 0.2 or less.

### (Compatibilizer (Component γ))

The water-soluble resin may be in the form of a water-soluble resin composition containing a compatibilizer. Examples of the compatibilizer include Bondfast(R) 7B and Bondfast 7M (both manufactured by Sumitomo Chemical Co., Ltd.), LOTADER(R) AX8840 (manufactured by Arkema), JONCRYL(R) ADR4370X, JONCRYL ADR4368CS, JONCRYL ADR4368F and JONCRYL ADR4300S (all manufactured by BASF), and ARUFON(R) UG4035, ARUFON UG4040 and ARUFON UG4070 (all manufactured by Toagosei Co., Ltd.). Examples of a reactive compatibilizer having an acid anhydride group include UMEX(R) 1010 (manufactured by Sanyo Chemical Industries, Ltd.), ADMER(R) (manufactured by Mitsui Chemicals, Inc.), MODIPER(R) A8200 (manufactured by Nippon Oil & Fats Co., Ltd.), OREVAC(R) (manufactured by Arkema), FG1901 and FG1924 (both manufactured by Kraton Polymers), and Tuftec(R) M1911, Tuftec M1913 and Tuftec M1943 (all manufactured by Asahi Kasei Chemicals Corporation). An example of a reactive compatibilizer having an isocyanate group includes Carbodilite(R) L manufactured by Nisshinbo.

The content of the component γ in the water-soluble resin composition with respect to 100 parts by mass of the water-soluble resin (component α) is, from the viewpoint of layer strength of the printed layer 7 and the like, preferably 1 part by mass or more, more preferably 2 parts by mass or more, and further preferably 3 parts by mass or more, and from the same viewpoint, preferably 20 parts by mass or less, and more preferably 10 parts by mass or less.

The water-soluble resin composition may contain another component as long as the effects of the present invention are not impaired. Examples of such another component include resins different from the component α**,** a plasticizer such as polyalkylene glycol diester of benzoic acid, a filler such as calcium carbonate, magnesium carbonate, glass sphere, graphite, carbon black, carbon fiber, glass fiber, talc, wollastonite, mica, alumina, silica, kaolin, whisker, or silicon carbide, and an elastomer.

Examples of the elastomer include an acrylic-based elastomer, an olefin-based elastomer, a styrene-based elastomer, a polyester-based elastomer, a urethane-based elastomer, a polyamide-based elastomer, and a silicone-based elastomer. Among these, one or more selected from the group consisting of an acrylic-based elastomer and a styrene-based elastomer is preferred, and an acrylic-based elastomer is more preferred. The styrene-based elastomer is preferably one or more selected from the group consisting of a styrene-butadiene copolymer and a styrene-butadiene-ethylene copolymer. The acrylic-based elastomer is preferably a methacrylic acid-acrylic acid alkyl copolymer. Examples of a commercially available product of the elastomer include Kurarity(R) LA2250, Kurarity LA2140 and Kurarity LA4285 (all manufactured by Kuraray Co., Ltd.). Examples of the olefin-based elastomer include Kraton(R) ERS polymer (manufactured by Kraton Polymers), Kraton A polymer and Kuraton G polymer (both manufactured by Kraton Polymers), "Tuftec H" series and "Tuftec P" series (manufactured by Asahi Kasei Chemicals Corporation), and SEPTON(R) and HYBRAR(R) (both manufactured by Kuraray Plastics Co., Ltd.).

The content of the elastomer in the water-soluble resin composition with respect to 100 parts by mass of the component α is, from the viewpoint of improving the layer strength of the printed layer 7 and the like, preferably 0.1 parts by mass or more, more preferably 1 part by mass or more, and more preferably 10 parts by mass or more, and from the same viewpoint, preferably 100 parts by mass or less, more preferably 60 parts by mass or less, and further preferably 40 parts by mass or less, and still further preferably 20 parts by mass or less.

The temperature-responsive water-soluble resin that is an example of the material soluble in warm water of 30°C or more, and the water-soluble resin composition containing the water-soluble resin have been thus described in detail so far.

In order that the printed layer 7 can be removed by washing with an aqueous solvent, it is necessary that the printed layer 7 should be formed neither between the laminated layers of the first film layer 1 nor between the laminated layers of the second film layer 2 but selectively on at least one surface selected from the outside surface 11 and the inside surface 13 of the first film layer 1 and the outside surface 21 and the inside surface 23 of the second film layer 2. In other words, a structure in which the printed layer 7 is included neither between the laminated layers of the first film layer 1 nor between the laminated layers of the second film layer 2 is required.

For example, a structure in which the printed layer 7 is formed in a region, excluding a attached surface 6 of the film attached portion, on the inside surface 13 of the first film layer 1 and/or the outside surface 21 of the second film layer 2 is described as a suitable embodiment.

When this structure is employed, the printed layer 7 plays also a role of a non-attaching agent (what is called an adhesion inhibiting agent), and the filler enclosed portion 5 and the film attached portion can be easily formed without using a special mold or the like. Besides, in this structure, when formed into the container, the printed layer 7 is not exposed on the surface of the container, and hence the rubbing, peeling and the like of the printed layer 7 caused by impact or the like applied from the outside of the container is difficult to occur. Furthermore, since the printed layer 7 is not in direct contact with the content, exudation of the ink into the content is unlikely to occur.

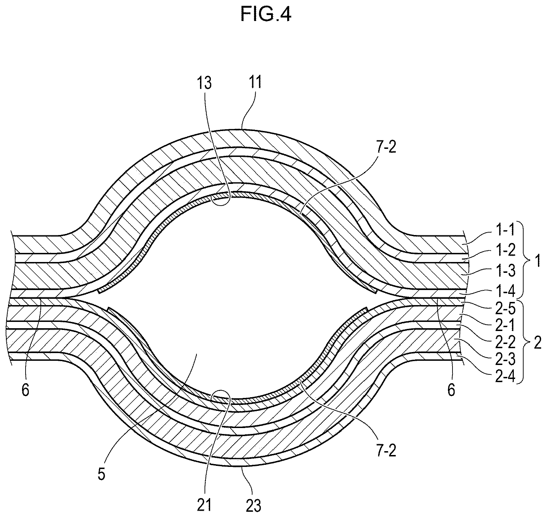

In more details, referring to Figs. 3 and 4, in the structure illustrated in these drawings, the ink layer 7-2 is formed as the printed layer 7 in a region excluding the attached surface 6 of the film attached portion on the inside surface 13 of the first film layer 1, namely, on a surface of the substrate layer 1-4 of the first film layer 1 opposing the second film layer 2, and the ink layer 7-2 is formed as the printed layer 7 further in a region excluding the attached surface 6 of the film attached portion on the outside surface 21 of the second film layer 2, namely, on a surface of the substrate layer 2-5 of the second film layer 2 opposing the first film layer 1. These ink layers 7-2 are obtained by using a toner, and is made of a material in which at least a part of a binder resin used therein is soluble in an aqueous solvent.

Then, as illustrated in Fig. 4, the inside surface 13 of the first film layer 1 and the outside surface 21 of the second film layer 2 are attached in the form of a film in a region where the printed layer 7 is not formed, to thereby form the attached surface 6, and the filler enclosed portion 5 is formed in the region excluding the attached surface 6. In other words, in the present embodiment, the printed layer 7 is formed in regions, on the inside surface 13 of the first film layer 1 and the outside surface 21 of the second film layer 2, in contact with the filler enclosed portion 5. In this case, as illustrated in Figs. 3 and 4, there is no need for the printed layer 7 formed on the inside surface 13 of the first film layer 1 and the printed layer 7 formed on the outside surface 21 of the second film layer 2 to completely overlap in their front and back surfaces. The printed layer 7 can be formed in an arbitrary region as long as the film attaching between the first film layer 1 and the second film layer 2 is not affected.

Next, a structure in which the printed layer 7 is formed on the outside surface 11 of the first film layer 1 is described as a modification. When this structure is employed, the printed layer 7 is very easily formed, and even after molding the container, the printed layer 7 can be formed. Besides, the content and the printed layer 7 are not in direct contact with each other but at least the two layers of the first film layer 1 and the second film layer 2 are present between the printed layer 7 and the content; accordingly, the exudation of the ink into the content is very unlikely to occur. Besides, since the filler enclosed portion 5 projects outward, the outside surface 11 of the first film layer 1 excluding the filler enclosed portion 5 minimally comes into contact with another container or the like. Furthermore, since the filler enclosed portion 5 acts as a cushion, the printed layer 7 formed on the outside surface 11 of the first film layer 1 is more difficult to be rubbed than in a container not including the filler enclosed portion 5.

In employing this structure, the printed layer 7 preferably includes the coating layer 7-1 outside the ink layer 7-2 in order to further inhibit the rubbing and peeling of the printed layer 7 caused by impact or the like applied from the outside of the container.

In more details referring to Fig. 2, in a modification illustrated in Fig. 2, the printed layer 7 is formed on the outside surface 11 of the first film layer 1, namely, on the surface of the substrate layer 1-1 of the first film layer 1 opposite to the surface opposing the second film layer 2. This printed layer 7 includes the underlayer 7-3 formed on the surface of the substrate layer 1-1 and soluble in an aqueous solvent, the ink layer 7-2 formed on the surface of the underlayer 7-3, and the coating layer 7-1 formed on the surface of the ink layer 7-2 in the stated order in the inside-to-outside direction of the container.

In this modification, the region for forming the printed layer 7 is not limited, and the printed layer 7 can be formed in an arbitrary region on the outside surface 11 of the first film layer 1. Besides, in order to easily inhibit the rubbing or the like, a structure in which the printed layer 7 is formed in a region on the outside surface 11 of the first film layer 1 excluding a portion corresponding to the filler enclosed portion 5 bulged out to the thickness direction of the sheet material may be employed. Besides, in employing the structure using the coating layer 7-1, an effect of inhibiting deterioration (including the peeling through the rubbing or the like) of the printed layer 7 caused by the environment outside the container can be further increased.

Next, a structure in which the printed layer 7 is formed on a surface of a film layer in contact with the containing region (for example, on the inside surface 23 of the second film layer 2 when the second film layer 2 is used to form the containing region) is described as another modification. When the container including the containing region is to be recycled after the content has been used up, it is necessary to remove, by washing, the content adhering and remaining in the container region. In employing the structure of this modification, when the content is removable by washing with an aqueous solvent, the printed layer 7 can be removed simultaneously with the washing of the content.

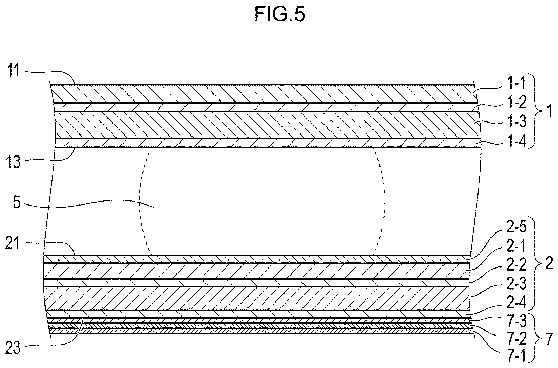

In more detail referring to Fig. 5, in a structure illustrated in Fig. 5, the second film layer 2 is used to form the containing region, and the printed layer 7 is formed on the inside surface 23 of the second film layer 2, namely, the surface of the substrate layer 2-4 of the second film layer 2 opposite to the surface opposing the first film layer 1. This printed layer 7 includes the underlayer 7-3 formed on the surface of the substrate layer 2-4 and soluble in an aqueous solvent, the ink layer 7-2 formed on the surface of the underlayer 7-3, and the coating layer 7-1 formed on the surface of the ink layer 7-2 in the stated order in the outside-to-inside direction of the container. It is noted that the coating layer 7-1 is a layer in direct contact with the content. Thus, the printed layer 7 can be removed simultaneously with removal of the content adhering and remaining on the coating layer 7-1 by washing with an aqueous solvent.

Also in this modification, the region for forming the printed layer 7 is not limited, and the printed layer 7 can be formed in an arbitrary region on the inside surface 23 of the second film layer 2. Besides, since the coating layer 7-1 is included, the effect of inhibiting the exudation of the ink from the ink layer 7-2 into the content is increased.

In order to ease the attaching, the printed layer 7 is, in any of these modifications, preferably formed neither on the attached surface 6 of the film attached portion disposed between the first film layer 1 and the second film layer 2 nor on a side sealing portion corresponding to an outermost peripheral portion to be sealed in forming the sheet material into a bag.

### [Second Embodiment]

Next, referring to Figs. 6 and 7, the second embodiment of the container of the present invention will be described in detail.

The container according to the second embodiment of the present invention is made of a sheet material including a plurality of layered film layers including a first film layer as the outermost film layer, a second film layer 2 disposed inside the first film layer 1, and a third film layer 3 disposed inside the second film layer 2. In other words, the second film layer 2 is disposed inside the first film layer 1 corresponding to the outermost film layer, the third film layer 3 is disposed inside the second film layer 2, and inside the third film layer 3, a containing region (inner container formed by the third film layer 3), formed into a bag by attaching at least a part of a periphery of the sheet material, for directly accommodating a content is present. This second embodiment employs a structure in which another film (third film layer 3) is disposed between the second film layer 2 and the containing region of the first embodiment.

The third film layer 3 forming the inner container may be provided with a spout 103 or the like as an opening. Besides, when the third film layer 3 and the second film layer 2 are not attached to each other as a whole, or when the third film layer 3 and the second film layer 2 are attached to each other in at least a part of their peripheries, the inner container is easily shrunk in using the content, so that the content can be easily completely discharged. Even when the third film layer 3 and the second film layer 2 are not attached to each other as a whole, however, a structure in which the third film layer 3 corresponding to the inner container is retained inside the second film layer 2 is preferred. In addition, an outside air introducing portion for introducing outside air may be provided between the third film layer 3 and the second film layer 2 so as to easily shrink the inner container as described above.

Also in this second embodiment, a filler enclosed portion 5 bulged out to the thickness direction of the sheet material than the film attached portion because the filler is present therein, and the film attached portion, where the first film layer 1 and the second film layer 2 are attached to each other are provided between the first film layer 1 and the second film layer 2, formed to surround the filler enclosed portion 5, in the same manner as in the first embodiment described above.

When the second film layer 2 and the third film layer 3 are attached in at least a part thereof, the attaching between the second film layer 2 and the third film layer 3 is preferably more easily detachable than the film attached portion where the first film layer 1 and the second film layer 2 are attached to each other.

In particular, the attaching between the second film layer 2 and the third film layer 3 more preferably employs a structure in which surfaces included in the inside surface 23 of the second film layer 2 and/or the outside surface 31 of the third film layer 3, having been subjected to an easily detachable treatment of any one of a corona treatment, a powder treatment, and an oil treatment using silicone or the like, are attached to each other by heat sealing or the like, or a structure in which an easy peelable substrate layer is used as a attaching layer between the second film layer 2 and the third film layer 3 (substrate layers 2-4 and 3-1 in an embodiment illustrated in Figs. 6 and 7). When such a structure is employed, the first film layer 1 and the second film layer 2 (outer container) including the film attached portion can be easily separated from the third film layer 3 (inner container). When this outer container is selectively collected and used as a recyclable raw material, the quality of a resultant recyclable material is further increased. In particular, the recyclability is further improved when a PE-based resin material is used in the easy peelable substrate layer.

The first film layer 1, the second film layer 2 and the third film layer 3 of the second embodiment are also layers working as a substrate of the sheet material as in the first embodiment described above, and are preferably made of, but are not limited to, resin materials. Suitable examples of the resin materials include the same materials described in the first embodiment above.

Besides, each of these film layers may be made of a single substrate layer, or may be in a structure in which a plurality of substrate layers, or a plurality of substrate layers and other layers are laminated as in the first embodiment described above. The laminating may be in either of a structure in which layers are laminated by heat seal bonding (not including a lamination bonded layer), or a structure including a lamination bonded layer laminated by bonding by dry lamination, extrusion lamination, coextrusion molding or the like.

Similarly, a layer working as an underlayer for the printed layer 7 and having a function to make an ink well taken may be provided, as another layer (added layer) different from the substrate layer of the film layer, on the surface of the film layer on which the printed layer 7 is formed.

An example of the container according to the second embodiment of the present invention includes the following layer structure.

The third film layer 3 forming the inner container has a three-layer structure obtained by laminating, for example, a substrate layer 3-1, a substrate layer 3-2 and a substrate layer 3-3 in the stated order.

Among these layers, the substrate layer 3-1 is made of, for example, linear low density polyethylene. As the principal function, the substrate layer 3-1 ensures heat sealability to the outer container (heat sealability to the second film layer 2 forming the outer container).

The substrate layer 3-2 is, for example, a layer of transparent deposited oriented nylon, formed on a surface of the substrate layer 3-2 on the side of the substrate layer 3-1, made of oriented nylon on which silica and/or alumina are vapor deposited. As the principal function, the substrate layer 3-2 ensures a gas barrier property and pinhole resistance.

The substrate layer 3-3 is made of, for example, linear low density polyethylene. As the principal function, the substrate layer 3-3 ensures the heat sealability between the third film layer 3.

It is noted that the layer structure of the third film layer 3 is not limited to the structure described here. Besides, examples of the structures of the first film layer 1 and the second film layer 2 include those described in the first embodiment above.

Besides, also in this second embodiment, the plurality of film layers (the substrate layers in particular) included in the sheet material preferably contain materials made of the same type of resins from the viewpoint of improving the recyclability, in the same manner as in the first embodiment described above. The materials are more preferably any one of polyethylene-based materials such as high density polyethylene (HDPE), middle density polyethylene (MDPE), low density polyethylene (LDPE), linear low density polyethylene (LLDPE), ultra low density polyethylene (ULDPE), and an ethylene-vinyl alcohol copolymer (EVOH), polypropylene-based materials such as oriented polypropylene (OPP), cast polypropylene (CPP), isotactic PP, syndiotactic PP, atactic PP, random PP, and block PP, polyester-based materials such as polyethylene terephthalate (PET), amorphous polyethylene terephthalate (amorphous PET), polybutylene terephthalate (PBT), polyethylene naphthalate (PEN), and polybutylene naphthalate (PBN), and polyamide-based materials such as oriented nylon (ONy), cast nylon (CNy), nylon 6, nylon 66, nylon 11, nylon 12, and MXD6, and are particularly preferably any one of the polyethylene-based materials.

Also in another modification, at least the first film layer 1 and the second film layer 2 out of the plurality of film layers included in the sheet material may contain materials made of the same type of resins, and the materials may be the polyethylene-based materials or the like, in the same manner as in the first embodiment described above.

As described above, in employing this structure, the first film layer 1 and the second film layer 2 are preferably separated from the container and collected in recycling the container, so as to use the first film layer 1 and the second film layer 2 as recyclable raw materials.

Also in the second embodiment of the container of the present invention, a printed layer 7 including an ink layer 7-2 is formed on at least one surface selected from the outside surface 11 and the inside surface 13 of the first film layer 1, and the outside surface 21 and the inside surface 23 of the second film layer 2. Besides, the printed layer 7 including the ink layer 7-2 may be formed on the outside surface 31 and/or the inside surface 33 of the third film layer 3. Alternatively, a structure in which the printed layer 7 is formed on neither the outside surface 11 and the inside surface 13 of the first film layer 1 nor the outside surface 21 and the inside surface 23 of the second film layer 2 but formed on the outside surface 31 and/or the inside surface 33 of the third film layer 3 may be employed.

Also the printed layer 7 of the second embodiment is a layer including the ink layer 7-2 made of a printing ink, and may include a coating layer 7-1 and the like in addition to the ink layer 7-2 in the same manner as in the first embodiment described above. The ink layer 7-2 can be formed by, for example, offset printing, screen printing, gravure printing, flexographic printing, or the like. The coating layer 7-1 may be a medium printed layer, that is, a colorless printed layer. Furthermore, also in the same manner as in the first embodiment described above, the printed layer 7 may further include an underlayer 7-3 soluble in an aqueous solvent in order that the printed layer 7 can be removed. The underlayer 7-3 can be formed by, for example, offset printing, screen printing, gravure printing, flexographic printing or the like, and can be formed by a method different from printing.

Also in the same manner as in the first embodiment described above, the printed layer 7 is removable, by washing with an aqueous solvent, from the surface of the film layer on which it is formed. The printed layer 7 may have any structure as long as it is removable, by using an aqueous solvent, as the printed layer 7, such as a structure in which the printed layer 7 includes the underlayer 7-3 formed on the surface of the film layer and soluble in an aqueous solvent, the ink layer 7-2 formed on the surface of the underlayer 7-3, and the coating layer 7-1 formed on the surface of the ink layer 7-2. Alternatively, the ink layer 7-2 may contain the material soluble in an aqueous solvent described above.

In particular, the printed layer 7 more suitably contains a material soluble in warm water of 30°C or more, preferably 40°C or more, more preferably 50°C or more, and further preferably 60°C or more. Specific examples of such a material include the temperature-responsive water-soluble resins described above as the examples in the first embodiment.

Also in the second embodiment, in order that the printed layer 7 can be removed by washing with an aqueous solvent, it is necessary to form the printed layer 7 neither between the laminated layers of the first film layer 1, between the laminated layers of the second film layer 2, nor between the laminated layers of the third film layer 3, but selectively on at least one surface selected from the outside surface 11 and the inside surface 13 of the first film layer 1, the outside surface 21 and the inside surface 23 of the second film layer 2, and the outside surface 31 and the inside surface 33 of the third film layer 3. In other words, it is necessary to employ a structure in which the printed layer 7 is included neither between the laminated layers of the first film layer 1, between the laminated layers of the second film layer 2, nor between the laminated layers of the third film layer 3.

For example, a structure in which the printed layer 7 is formed on the inside surface 23 of the second film layer 2 and/or the outside surface 31 of the third film layer 3 is employed.

When this structure is employed, the printed layer 7 can be formed without affecting attached strength of the film attached portion and the like, and since the printed layer 7 is not exposed on the surface of the container, the rubbing, peeling and the like of the printed layer 7 caused by impact or the like applied from the outside of the container is more difficult to occur. Besides, since the content and the printed layer 7 are not in direct contact, the exudation of the ink into the content is unlikely to occur.

This structure will be described in detail with reference to Fig. 6, and in this structure, the ink layer 7-2 is formed, as the printed layer 7, on the inside surface 23 of the second film layer 2, namely, the surface of the substrate layer 2-4 of the second film layer 2 opposing the third film layer 3, and the ink layer 7-2 is formed, as the printed layer 7, on the outside surface 31 of the third film layer 3, namely, on the surface of the substrate layer 3-1 of the third film layer 3 opposing the second film layer 2. These ink layers 7-2 are obtained by using a toner, and made of a material in which at least a part of a binder resin used therein is soluble in an aqueous solvent.

When this structure is employed, influence on the film attaching, influence from an external environment and the exudation of the ink into the content are all very unlikely to occur regardless of a print region of the printed layer 7, and therefore, the printed layer 7 can be formed in an arbitrary region on the inside surface 23 of the second film layer 2 and the outside surface 31 of the third film layer 3. Since the influence from an external environment and the exudation of the ink into the content are unlikely to occur, this printed layer 7 need not include the coating layer 7-1. Furthermore, it is preferable that a character printed layer in which characters indicating the content and its ingredients are printed should be formed on the inside surface 23 of the second film layer 2, and that a pattern printed layer (preferably, a pattern printed layer not including characters) in which a figure, a pattern or the like is printed should be formed on the outside surface 31 of the third film layer 3. Thus, the character printed layer can be very easily seen until the content is used up.

In this case, a structure in which the printed layer 7 is formed on the outside surface 11 of the first film layer 1, namely, a structure in which the printed layer 7 is formed on the three surfaces of the outside surface 11 of the first film layer 1, the inside surface 23 of the second film layer 2, and the outside surface 31 of the film layer 3, may be employed.

In particular, legal display items, that is, items regarding a product required to display, regulated by the law of each country, such as mandatory items (such as the name, the content, the expiration date, and the dosage) of pharmaceuticals, cosmetics and the like required by Japan's Pharmaceutical and Medical Device Act (Act on Securing Quality, Efficacy and Safety of Products Including Pharmaceuticals and Medical Devices), are preferably shown in the printed layer 7 formed on at least one surface selected from the surfaces of the film layers excluding the outside surface 11 of the first film layer and the surface of the film layer in contact with the containing region. For example, in the second embodiment, such legal display items are preferably shown in the printed layer 7 formed on at least one surface selected from the inside surface 13 of the first film layer 1, the outside surface 21 of the second film layer 2, the inside surface 23 of the second film layer 2, and the outside surface of the third film layer 3 (more suitably, in such a printed layer 7 alone). Other information such as a lot number, a pattern, design, and background is preferably printed and shown in the printed layer 7 formed on the outermost layer (the outside surface 11 of the first film layer 1). The legal display items are more preferably shown merely in the printed layer 7 formed on the inside surface 23 of the second film layer 2 in the example described in the second embodiment. When this structure is employed, the legal display items are not rubbed or peeled, and can be very easily seen until the content is used up. On the other hand, the other information such as background or the like is printed on the outermost layer, and hence the design is further improved.

For example, as illustrated in the modification illustrated in Fig. 7, a structure in which the printed layer 7 for the background or the like is formed on the outside surface 11 of the first film layer 1, namely, on the surface of the substrate layer 1-1 of the first film layer 1 opposite to the surface opposing the second film layer 2, and the printed layer 7 having the legal display items printed therein is formed on the inside surface 23 of the second film layer 2, namely, on the surface of the substrate layer 2-4 of the second film layer 2 opposing the third film layer 3, is very preferable.

In employing this structure, not only the influence on the film attaching and the exudation of the ink into the content are unlikely to occur but also the printed layer 7 is minimally deformed even when the inner container (third film layer 3) forming the containing region shrinks through use of the content. Therefore, the printed matter (particularly the legal display items) is very easily seen until the content is used up.

In the same manner as described in the first embodiment above, still other modifications include a structure in which the printed layer 7 is formed in a region, excluding the attached surface 6 of the film attached portion (for example, a region in contact with the filler enclosed portion 5), on the inside surface 13 of the first film layer 1 and/or the outside surface 21 of the second film layer 2, a structure in which the printed layer 7 is formed on the outside surface 11 of the first film layer 1, and a structure in which the printed layer 7 is formed on a surface of a film layer in contact with the containing region (the inside surface 33 of the third film layer 3).

Also in the second embodiment, it is preferable, for easing the film attaching, that the printed layer 7 should be formed neither on the attached surface 6 of the film attached portion disposed between the first film layer 1 and the second film layer 2 nor on a side sealing portion corresponding to an outermost peripheral portion to be sealed in forming the sheet material into a bag, and on an attached portion between the second film layer 2 and the third film layer 3.

In both the first embodiment and the second embodiment of the container of the present invention, a thickness (dimension measured vertically to the principal surface of the sheet material) of the entire sheet material before enclosing the filler is preferably 20 µm or more, and more preferably 30 µm or more. In addition, the thickness is preferably 300 µm or less, and more preferably 200 µm or less. Besides, a thickness of each film layer is preferably 5 µm or more, and more preferably 10 µm or more. In addition, the thickness is preferably 80 µm or less, and more preferably 50 µm or less. Such a container of the present invention is very thin in spite of the rigidity of the container main body.

In the container of the present invention, for attaining higher recyclability, the substrate layers of all the film layers are preferably made of materials containing the same type of resins, and more preferably substantially do not contain another material in addition to such materials. The term "not to substantially contain" means a mass ratio of less than 1%, preferably less than 0.5%, and most preferably 0% of each film.

In both the first embodiment and the second embodiment of the container of the present invention, a thickness (dimension measured vertically to the principal surface of the sheet material) of the printed layer 7 formed on the surface of the film layer of the sheet material is preferably 0.5 µm or more. In addition, for easing the removal by washing, the thickness is preferably 30 µm or less, and more preferably 10 µm or less.

The structures of the respective film layers of the sheet materials described in the first embodiment and the second embodiment of the container of the present invention are variously changed and modified in accordance with characteristics required in forming the container, the type of the content and the like, and are not limited to those described in the embodiments.

The container of the present invention including the above-described embodiments is a container that retains rigidity as a container owing to the filler enclosed portion 5, and has printability (a characteristic for making a printed layer easily formed, and a characteristic for making the formed printed layer difficult to peel by rubbing or the like) as well as high recyclability. Besides, a thick container has a hard film end and hence it may pain when a hand touches the container (the grip feeling of the container is not well); however, the sheet material can be thinned in the container of the present invention, and hence the grip feeling of the container is further improved.

In recycling process for the container of the present invention, as described above, the container main body is squashed after removing the filler from the filler enclosed portion 5, the opening (such as the spout 103), the cap and the like are separated if necessary, and the resultant is shredded and washed; thus, a recyclable raw material with good quality can be easily obtained. In particular, since the printed layer 7 of the container of the present invention can be removed from the film layer by washing with an aqueous solvent as described above, a recyclable material with good quality minimally colored with an ink can be easily obtained by using such a recyclable raw material.

An example of a method for producing the container of the present invention include, but is not limited to, the following method.

First, the printed layer 7 including the ink layer 7-2 is formed on the surface of the film layer. Then, the layers of the first film layer 1 and the second film layer 2 are layered on one another, and the resultant is partially attached (for example, heat sealed) to produce the sheet material including the film attached portion and the filler enclosed portion 5. Furthermore, the layers of the film layer 3 and the like forming the inner container are layered on one another if necessary to produce the sheet material. The periphery of the inner container may be disposed slightly inside the periphery of the sheet material. If necessary, the bottom gusset portion 101, the top gusset portion 102, the spout 103 and the like may be attached.

Next, the sheet material is folded to attach the periphery of the sheet material, and thus, a sheet for the container is produced. This sheet includes the plurality of layered film layer including the first film layer 1 and the second film layer 2, is formed into a bag by attaching at least a part of the periphery of the sheet material to form the containing region for accommodating the content inside, includes, between the first film layer 1 and the second film layer 2, the film attached portion where the first film layer 1 and the second film layer 2 are attached to each other, and the filler enclosed portion 5 that is partially non-attached and is capable of enclosing the filler, and the printed layer 7 including the ink layer 7-2 is formed on at least one surface of the surfaces of the film layers. In the sheet for the container, the filler is introduced into the filler enclosed portion 5 through the filler introducing portion or the like, and the resultant is sealed. In this manner, the container of the present invention in which the filler enclosed portion 5 bulged out to the thickness direction of the sheet material to impart the rigidity can be produced. Thereafter, the content is filled in the containing region (such as the inner container) through the spout 103 or the like of the container, the resultant is sealed by a cap with a pump or the like, and thus, the container-packed product can be obtained.

The embodiments encompass the following technical ideas:
<1> A container made of a sheet material including a plurality of layered film layers including a first film layer and a second film layer,
   wherein the sheet material is formed into a bag by attaching at least a part of a periphery of the sheet material to form a containing region for accommodating a content inside the second film layer,
   the container comprises, between the first film layer and the second film layer, a film attached portion where the first film layer and the second film layer are attached to each other, and a filler enclosed portion bulged out to a thickness direction of the sheet material than the film attached portion because the filler is present therein,
   a printed layer including an ink layer is formed on at least one surface selected from outside and inside surfaces of the first film layer, and outside and inside surfaces of the second film layer, and
   the printed layer is removable from the surface of the film layer by washing with an aqueous solvent.
<2> The container according to <1>, wherein the second film layer is disposed inside the first film layer.
<3> The container according to <1> or <2>, wherein the sheet material further includes a third film layer disposed inside the second film layer, and the sheet material is formed into a bag by attaching at least a part of the periphery of the sheet material to form the containing region for accommodating the content inside the third film layer.
<4> A container made of a sheet material including a plurality of layered film layers including a first film layer, a second film layer, and a third film layer,
   wherein the sheet material is formed into a bag by attaching at least a part of a periphery of the sheet material to form a containing region for accommodating a content inside the third film layer,
   the container comprises, between the first film layer and the second film layer, a film attached portion where the first film layer and the second film layer are attached to each other, and a filler enclosed portion bulged out to a thickness direction of the sheet material than the film attached portion because the filler is present therein,
   a printed layer including an ink layer is formed on at least one surface selected from outside and inside surfaces of the first film layer, outside and inside surfaces of the second film layer, and outside and inside surfaces of the third film layer, and
   the printed layer is removable from the surface of the film layer by washing with an aqueous solvent.
<5> The container according to <3> or <4>, wherein the second film layer is disposed inside the first film layer, and the third film layer is disposed inside the second film layer.
<6> The container according to any one of <3> to <5>, wherein the second film layer and the third film layer are attached to each other at least in a part, and attaching between the second film layer and the third film layer is more easily detachable as compared with the film attached portion where the first film layer and the second film layer are attached to each other.
<7> The container according to <6>, wherein the attaching between the second film layer and the third film layer is attaching between corona-treated surfaces provided in the inside surface of the second film layer and/or the outside surface of the third film layer.
<8> The container according to any one of <3> to <7>, wherein the printed layer is formed on the outside surface and/or the inside surface of the third film layer.
<9> The container according to any one of <3> to <8>, wherein the printed layer is formed on the inside surface of the second film layer and/or the outside surface of the third film layer.
<10> The container according to any one of <1> to <9>, wherein the printed layer includes an underlayer formed on the surface of the film layer and soluble in an aqueous solvent, and the ink layer formed on a surface of the underlayer.
<11> The container according to any one of <1> to <10>, wherein the printed layer is formed in a region excluding a attached surface of the film attached portion on the inside surface of the first film layer and/or the outside surface of the second film layer.
<12> The container according to <11>, wherein the printed layer is formed in a region in contact with the filler enclosed portion on the inside surface of the first film layer and the outside surface of the second film layer.
<13> The container according to any one of <1> to <12>, wherein the printed layer is formed on the outside surface of the first film layer.
<14> The container according to any one of <1> to <13>, wherein the printed layer is formed on a surface of the film layer in contact with the containing region.
<15> The container according to any one of <1> to <14>, wherein legal display items are shown in the printed layer formed on at least one surface selected from the surfaces of the film layers excluding the outside surface of the first film layer and a surface of the film layer in contact with the containing region.
<16> The container according to <15>, wherein the legal display items are shown in the printed layer formed on the inside surface of the second film layer.
<17> The container according to <15> or <16>, wherein printing excluding the legal display items are printed in the printed layer formed on the outside surface of the first film layer.
<18> The container according to any one of <1> to <17>, wherein the printed layer is removable from the surface of the film layer by washing with warm water of 30°C or more, preferably 40°C or more, more preferably 50°C or more, and further preferably 60°C or more.
<19> The container according to any one of <1> to <18>, wherein the printed layer is not removed from the surface of the film layer by washing with water cooler than 30°C but is removable from the surface of the film layer by washing with warm water not less than a specific temperature of 30°C or more.
<20> The container according to <18> or <19>, wherein the printed layer contains a temperature-responsive water-soluble resin that contains a monomer unit A having a hydrophilic group different from a hydrophilic group constituting polymerization related to formation of the resin, and a monomer unit B not having a hydrophilic group different from the hydrophilic group constituting the polymerization related to the formation of the resin, a ratio of an amount of the monomer unit A to a total amount of all monomer units being 5% by mole or more and 35% by mole or less.
<21> The container according to any one of <1> to <20>, wherein at least the first film layer and the second film layer contain materials made of the same type of resins, and
   the materials made of the same type of resins are polyethylene-based materials, and are at least one selected from the group consisting of high density polyethylene (HDPE), middle density polyethylene (MDPE), low density polyethylene (LDPE), linear low density polyethylene (LLDPE), ultra low density polyethylene (ULDPE), and an ethylene-vinyl alcohol copolymer (EVOH).
<22> The container according to any one of <1> to <21>, wherein substrate layers of the plurality of film layers all contain materials made of the same type of resins, and do not substantially contain another material in addition to the materials made of the same type of resins.
<23> The container according to <1> to <22>, wherein a thickness of the printed layer is 0.5 µm or more and 30 µm or less.
<24> The container according to any one of <1> to <23>, wherein a thickness (dimension measured vertically to a principal surface of the sheet material) of the entire sheet material before enclosing the filler is 20 µm or more, and preferably 30 µm or more, and 300 µm or less, and preferably 200 µm or less.
<25> The container according to any one of <1> to <24>, wherein a thickness of each film layer is 5 µm or more, preferably 10 µm or more, and 80 µm or less, and preferably 50 µm or less.
<26> A container-packed product, comprising the container according to any one of <1> to <25>, and a content accommodated in the containing region of the container.

This application claims the priority based on PCT Patent Application No. PCT/JP2019/034166, filed on August 30, 2019, the disclosures of which are all incorporated herein.

### [Reference Signs List]

- 1: first film layer
- 2: second film layer
- 3: third film layer
- 5: filler enclosed portion
- 6: attached surface of film attached portion
- 7: printed layer
- 7-1: coating layer
- 7-2: ink layer
- 7-3: underlayer
- 11: outside surface of first film layer
- 13: inside surface of first film layer
- 21: outside surface of second film layer
- 23: inside surface of second film layer
- 31: outside surface of third film layer
- 33: inside surface of third film layer
- 101: bottom gusset portion
- 102: top gusset portion
- 103: spout

## Claims

1. A container made of a sheet material including a plurality of layered film layers including a first film layer and a second film layer,
wherein the sheet material is formed into a bag by attaching at least a part of a periphery of the sheet material to form a containing region for accommodating a content inside the second film layer,
the container comprises, between the first film layer and the second film layer, a film attached portion where the first film layer and the second film layer are attached to each other, and a filler enclosed portion bulged out to a thickness direction of the sheet material than the film attached portion because the filler is present therein,
a printed layer including an ink layer is formed on at least one surface selected from outside and inside surfaces of the first film layer, and outside and inside surfaces of the second film layer, and
the printed layer is removable from the surface of the film layer by washing with an aqueous solvent.

2. The container according to claim 1,
wherein the sheet material further includes a third film layer disposed inside the second film layer, and is formed into a bag by attaching at least a periphery of the sheet material to form the containing region for accommodating the content inside the third film layer.

3. A container made of a sheet material including a plurality of layered film layers including a first film layer, a second film layer, and a third film layer,
wherein the sheet material is formed into a bag by attaching at least a part of a periphery of the sheet material to form a containing region for accommodating a content inside the third film layer,
the container comprises, between the first film layer and the second film layer, a film attached portion where the first film layer and the second film layer are attached to each other, and a filler enclosed portion bulged out to a thickness direction of the sheet material than the film attached portion because the filler is present therein,
a printed layer including an ink layer is formed on at least one surface selected from outside and inside surfaces of the first film layer, outside and inside surfaces of the second film layer, and outside and inside surfaces of the third film layer, and
the printed layer is removable from the surface of the film layer by washing with an aqueous solvent.

4. The container according to claim 2 or 3, wherein the printed layer is formed on the outside surface and/or the inside surface of the third film layer.

5. The container according to any one of claims 2 to 4, wherein the printed layer is formed on the inside surface of the second film layer and/or the outside surface of the third film layer.

6. The container according to any one of claims 1 to 5, wherein the printed layer includes an underlayer formed on the surface of the film layer and soluble in an aqueous solvent, and the ink layer formed on a surface of the underlayer.

7. The container according to any one of claims 1 to 6, wherein the printed layer is formed in a region excluding a attached surface of the film attached portion on the inside surface of the first film layer and/or the outside surface of the second film layer.

8. The container according to claim 7, wherein the printed layer is formed in a region in contact with the filler enclosed portion on the inside surface of the first film layer and the outside surface of the second film layer.

9. The container according to any one of claims 1 to 8, wherein the printed layer is formed on the outside surface of the first film layer.

10. The container according to any one of claims 1 to 9, wherein the printed layer is formed on the surface of the film layer in contact with the containing region.

11. The container according to any one of claims 1 to 10, wherein legal display items are shown in the printed layer formed on at least one surface selected from surfaces of the film layers excluding the outside surface of the first film layer and the surface of the film layer in contact with the containing region.

12. The container according to claim 11, wherein the legal display items are shown in the printed layer formed on the inside surface of the second film layer.

13. The container according to claim 11 or 12, wherein printing excluding the legal display items are printed in the printed layer formed on the outside surface of the first film layer.

14. The container according to any one of claims 1 to 13, wherein the printed layer is removable from the surface of the film layer by washing with warm water of 30°C or more.

15. The container according to any one of claims 1 to 14,
wherein at least the first film layer and the second film layer contain materials made of the same type of resins, and
the materials made of the same type of resins are polyethylene-based materials, and are at least one selected from the group consisting of high density polyethylene (HDPE), middle density polyethylene (MDPE), low density polyethylene (LDPE), linear low density polyethylene (LLDPE), ultra low density polyethylene (ULDPE), and an ethylene-vinyl alcohol copolymer (EVOH).

16. The container according to any one of claims 1 to 15, wherein substrate layers of the plurality of film layers all contain materials made of the same type of resins, and do not substantially contain another material in addition to the materials made of the same type of resins.

17. A container-packed product, comprising the container according to any one of claims 1 to 16, and a content accommodated in the containing region of the container.
